# EUROPÄISCHE PATENTSCHRIFT

(11) **EP 1 657 534 B1**
(45) Veröffentlichungstag und Bekanntmachung des Hinweises auf die Patenterteilung: **02.03.2011**
(21) Anmeldenummer: 05019727.6
(22) Anmeldetag: 10.09.2005
(51) Int. Cl.: G01G 19/00, G01G 19/414, G07B 17/00

(54) **Verfahren zum Wiegen von bewegtem Postgut**
Method for weighing moving mail.
Procédé pour le pesage de courrier en mouvement.

(30) Priorität: 15.11.2004 DE 102004054999
(43) Veröffentlichungstag der Anmeldung: 17.05.2006
(73) Patentinhaber: Francotyp-Postalia GmbH, 16547 Birkenwerder (DE)
(72) Erfinder: Hübler, Uwe, 15366 Neuenhagen (DE); Kunde, Christoph, 13469 Berlin (DE); Schmidt-Kretschmer, Michael, Dr., 16565 Lehnitz (DE)

(56) Entgegenhaltungen:
- EP-A- 1 014 050
- US-A- 5 990 422
- US-A1- 2002 166 704
- US-A1- 2003 024 744
- ZINKE B: "DYNAMISCHES WAEGEN" WDM : WAGEN DOSIEREN + MISCHEN, VERLAG COATING THOMAS & CO., ST. GALLEN, CH, Bd. 33, Nr. 3, Mai 2002 (2002-05), Seiten 16-20, XP001132863 ISSN: 1435-2176

## Beschreibung

Die Erfindung betrifft ein Verfahren zum Wiegen von bewegtem Postgut, insbesondere von auf einer Kante stehend angeordneten Briefen. Das Verfahren ist für Anwender von Postverarbeitungssystemen mit einer dynamischen Waage und portoberechnenden Frankiermaschine beziehungsweise mit dynamischen Portorechnerwaagen und Frankiereinrichtungen geeignet.

Postverarbeitungssysteme bestehen üblicherweise aus einer Postgutvereinzelungsvorrichtung, einer Waage, einer Frankiermaschine und einer Ablagevorrichtung, siehe DE 27 17 721 A1 und DE 37 31 525 C2.

Derartige Postverarbeitungssysteme sind in der Regel für Mischpost vorgesehen. Das bedeutet einen Lastenbereich von 3 bis 1000 Gramm, eine Lastdicke zwischen 0,5 bis 20 Millimeter und Lastlängen zwischen 100 bis 353 Millimeter.

Es ist eine Briefvereinzelungsvorrichtung bekannt, siehe DE 199 12 807 A1, die mit Mitteln zur Dimensionsbestimmung der Briefe ausgerüstet ist. Die so ermittelten Daten werden an eine Nachfolgeeinrichtung, wie Waage und oder Frankiermaschine, weitergeleitet; siehe auch EP 1 189 041 A1.

Bei modemen Postverarbeitungssystemen ist die Waage als dynamische Waage ausgeführt, um einen schnelleren Durchsatz zu erzielen, vergleiche DE 198 33 767 C2 beziehungsweise EP 0 974 819 A2. Die Waage weist einen Wiegeteller auf, dessen Boden durch den Transportriemen einer Transporteinrichtung gebildet wird. Zur Führung des Postgutes hat der Wiegeteller eine Rückwand. Das Postgut wird während des Transports gewogen. Der Wiegeteller ist in Leichtbauweise biege- und verwindungssteif ausgeführt und am ungefähren Ort des gemeinsamen Schwerpunktes des Wiegetellers und eines mittig auf dem Wiegeteller angeordneten Postgutes mit dem höchstzulässigen Gewicht und den größten zulässigen Abmessungen an eine Wiegezelle angekoppelt. Die Wiegezelle ist so beschaffen, daß der maximale Hub im Mikrometerbereich liegt. Die Länge des Wiegetellers ist entsprechend an die größte zu verarbeitende Postgutlänge angepaßt. Das bedeutet, der Abstand zwischen einem langen Postgut und dem nächstfolgenden Postgut ist mindestens gleich Wiegetellerlänge plus Länge für die benötigte Meßzeit.

Es ist eine Anordnung zur Kommunikation zwischen Stationen einer Postbearbeitungssmaschine bekannt, siehe EP 0 875 864 A2, insbesondere Fig. 2b und 3b, bei der die dynamischen Waage über Datenkabel schnittstellenmäßig sowohl mit einer vorgeordneten automatischen Zuführung als auch mit einer nachgeordneten Frankiermaschine verbunden ist. Im einzelnen weist die Waage eine Steuerung, eine Notauslogik, zwei Schnittstellen und zugeordnete Anschlußkontaktmittel auf. Innerhalb der Waage ist die Steuerung mit der Notauslogik und den Schnittstellen verbunden.

Weiterhin ist ein Verfahren und eine Anordnung zum Bestimmen eines Gewichtes mit einer dynamischen Waage bekannt, siehe EP 1 014 052 A1. Die Anordnung umfaßt eine Transporteinrichtung, einen Wiegeteller, eine Wiegezelle, Sensoren für den Postguteinlauf und -auslauf sowie eine elektronische Steuereinheit. Die Steuereinheit dient zur Steuerung der Transporteinrichtung sowie zur Auswertung der von der Wiegezelle übermittelten Meßwerte und zur Meßwertkorrektur anhand bestimmter Parameter und zur Ausgabe eines korrigierten Gewichtswertes über eine Schnittstelle an eine Frankiermaschine. Verfahrensgemäß erfolgt eine Auswahl eines mittig liegenden Meßwertes zum Vergleich mit mindestens einem Überlastgrenzwert hinsichtlich einer Prüfung auf Überlastfreiheit und eine Bildung eines Entscheidungsparameters zum Vergleich mit mindestens einem Abschaltkriterium hinsichtlich einer Prüfung auf Gültigkeit der von der Wiegezelle übermittelten Meßwerte. Bei diesem Verfahren beginnt die Meßzeit, wenn das Postgut mit seiner Hinterkante den Eingangssensor passiert hat und endet die Meßzeit, wenn das Postgut mit seiner Hinterkante den Ausgangssensor passiert hat.

Schließlich ist noch ein Verfahren zur Steuerung einer dynamischen Waage bekannt, siehe EP 1 014 050 A1, die gemischtes Postgut mit unterschiedlicher Größe und Dicke verarbeiten kann und die in mindestens zwei Betriebsmoden betrieben werden kann, wobei das Postgut anschließend eine weitere Verarbeitungsstation durchläuft. Analog wie bei der eingangs genannten Lösung dient zum Transport des Postgutes ein von einem Motor angetriebener Transportriemen, der zugleich den Boden des Wiegetellers bildet. Für den Motor ist eine Steuerung zur Drehzahlregelung vorgesehen. Wenn sich ein Poststück im Einlauf der Waage befindet, wird es unabhängig von seinem Format mit einer auf einen voreingestellten Wert eingestellten Transportgeschwindigkeit zugeführt bei dynamischem Betriebsmodus vor dem Beginn eines ersten Meßzeitbereiches.

Im ersten Meßzeitbereich wird die Drehzahlregelung von der Steuerung der Waage deaktiviert und eine ungeregelte Impulsspannung an den Gleichstommotor angelegt, so daß eine dynamische Gewichtsmessung bei deaktivierter Drehzahlregelung erfolgt. Durch ein Zusammenwirken des Gleichstrommotors mit einer Spannvorrichtung für eine definierte Einstellung der Riemenspannung des Transportriemens und mit einem schwingungsgedämpften Aufbau der Transportvorrichtung der Waage verändert sich die Transportgeschwindigkeit in Abhängigkeit vom Postgutgewicht im ersten Meßzeitbereich. Somit werden beim dynamischen Wiegen die schweren Poststücke automatisch langsamer transportiert und infolgedessen die verfügbare Meßzeit vergrößert. Die Auswertung der Messungen erfolgt in der Steuerung der Waage und erfordert eine Rechenzeit und eine Reaktionszeit. Die Vorderkante des Poststückes verläßt nach Ablauf der Meßzeit den Wiegeteller. Wenn nach Ablauf der Meßzeit ein Algorithmus zur Fehlererkennung einen Fehler detektiert, wird die Waage von der Steuerung in einen Nachwiegemodus automatisch umgeschaltet. Bei den gewählten Maßen des Wiegetellers wurde das größte zu verarbeitende Format berücksichtigt. Die gewählte Transportgeschwindigkeit des Riemens entspricht zwar der Transportgeschwindigkeit in der nachfolgenden Frankiermaschine, jedoch verringern die eingestellten Abstände von Poststück zu Poststück die Taktleistung der Waage auf ungefähr zwei Drittel der maximalen Taktleistung der Frankiermaschine. Die Erfahrungen haben gezeigt, daß unter diesen Bedingungen ein Nachmessen - gleichbedeutend Transportunterbrechung und Zurückfahren des Poststückes - nur selten erforderlich ist.

Bei einem sich im Auslauf der Waage befindenden Poststück erfolgt wieder eine Aktivierung der Drehzahlregelung für den Motor.

Nachdem das gewogene Poststück die Waage verlassen hat, wird das nächstfolgende Poststück auf den Wiegeteller geleitet. Daraus folgt, daß der Mindestabstand zwischen zwei aufeinander folgenden Poststücken mehr als eine Wiegetellerlänge beträgt, das ist besonders nachteilig bei kurzen, leichten Briefen. Für die Postgutverarbeitung in der Frankiermaschine sind jedoch wesentlich kleinere Abstände zwischen den Poststücken zulässig.

Zweck der Erfindung ist eine bessere Ausnutzung vorhandener Möglichkeiten zur Steigerung des Durchsatzes.

Der Erfindung liegt die Aufgabe zugrunde, kleinere Abstände zwischen den Poststücken zu erzielen, ohne die Transportgeschwindigkeit im Waagebereich gegenüber der Transportgeschwindigkeit in der Nachfolgeeinrichtung zu steigern.

Die Erfindung geht von dem bisher unberücksichtigten Sachverhalt aus, daß die erforderliche Meßzeit stets kürzer ist als die Verweilzeit des Poststückes auf dem Wiegeteller. Besonders groß ist der Unterschied bei kurzen leichten Briefen, da hier die Einschwingzeit für die Waage auch entsprechend kurz ist.
Erfindungsgemäß wird das nächstfolgende Poststück bereits auf den Wiegeteller geleitet, nachdem ein stabiles Meßergebnis für das zuletzt gewogene Poststück vorliegt. Das zugeordnete Gewicht wird rechentechnjsch durch Addition - ein Poststück kommt zusätzlich auf den Wiegeteller - beziehungsweise durch Subtraktion - ein Poststück verläßt den Wiegeteller - ermittelt. Sind die Poststücke Briefe, so können unter den Voraussetzungen des kleinstmöglichen Abstandes zwischen den Briefen und der kürzesten zugelassenen und leichten Briefe - gleichbedeutend kürzeste Meßzeit - gleichzeitig mehrere Briefe auf dem Wiegeteller sein. In der Regel werden zwei Briefe gleichzeitig auf dem Wiegeteller sein. Das entspricht einer Erhöhung des Durchsatzes gegenüber dem bisherigen Stand um mindestens das Doppelte. Der kleinstmögliche Abstand zwischen zwei Briefen beträgt zwischen 20 bis 50% der kürzesten Brieflänge und ist durch die Bedingungen bei der Vereinzelung festgelegt. Die Erhöhung des Durchsatzes vergrößert wiederum den Spielraum für die Anpassung an die Verarbeitungsgeschwindigkeit der vor- und nachgeordneten Geräte des Postverarbeitungssystems.
Vorteilhafte Weiterbildungen der Erfindung sind den Unteransprüchen zu entnehmen beziehungsweise werden in den Ausführungsbeispielen beschrieben.

Die Erfindung wird nachstehend anhand von Ausführungsbeispielen näher erläutert. Es zeigen:
- Fig. 1: Ein Blockschaltbild einer dynamischen Waage,
- Fig. 2: mögliche Bestückungsfälle (1) des Wiegetellers und zugeordnete Zeitdiagramme (2),
a) einzelner langer Brief,
b) kurzer Brief nach langem Brief,
c) kurzer Brief nach kurzem Brief,
d) drei kurze Briefe hintereinander,
e) langer Brief nach kurzem Brief,
f) langer Brief nach langem Brief,
- Fig. 3: ein Flußdiagramm für die gesamte Steuerung der Waage,
- Fig. 4: ein Flußdiagramm für die Steuerung der Wiegewertbestimmung.

Zur Vereinfachung und zum leichteren Verständnis ist die Darstellung teilweise schematisiert ausgeführt. Der Kürze halber wird im weiteren für Postgut/-stück der Begriff "Brief" verwendet.

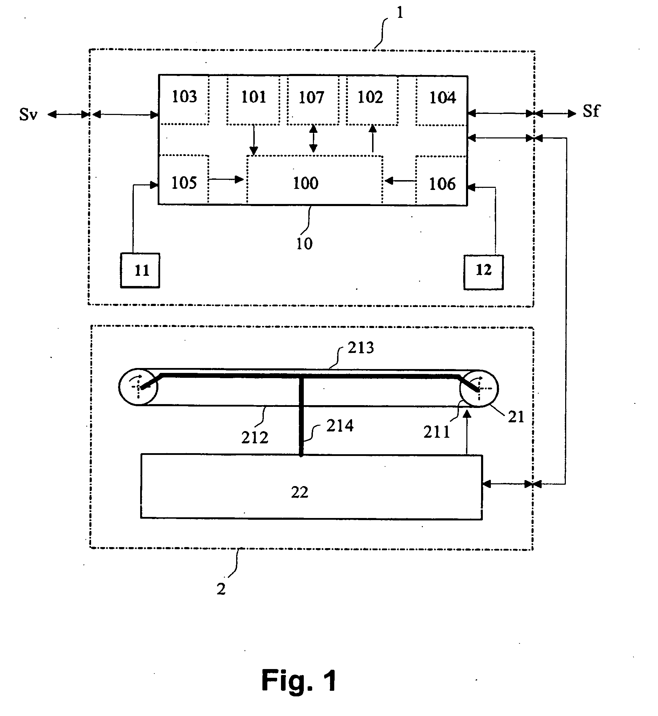

Gemäß Fig. 1 besteht eine dynamische Waage zur Durchführung des erfindungsgemäßen Verfahrens im wesentlichen aus einem Steuerteil 1 und einem Transport- und Wiegeteil 2.

Der Steuerteil 1 weist einen Rechner 10 mit einem Mikroprozessor 100, einem Programmspeicher 101 für die Betriebssoftware, einem nichtflüchtigen Speicher 102 für Betriebsdaten, wie Transportgeschwindigkeit oder Meßgenauigkeit, einem als RAM ausgeführten Arbeitsspeicher 107, einer Ein/Ausgabe-Schnittstelle 103 eingangsseitig, einer Ein/Ausgabe-Schnittstelle 104 ausgangsseitig, einem Eingangszähler 105 für zugehende Briefe B, einem Ausgangszähler 106 für abgehende Briefe B, sowie einen Eingangssensor 11 und einen Ausgangssensor 12 auf.

Die Ein/Ausgabe-Schnittstelle 103 eingangsseitig ist über eine bidirektionale Datenleitung mit einer Vereinzelungsvorrichtung zum Austausch von Signalen Sv verbunden. Das können beispielsweise Signale dazu sein, ob ein Brief B auf den Wiegeteller 213 auflaufen darf oder welche Art - Länge, Dicke, Höhe - von Brief zu erwarten ist.

Die Ein/Ausgabe-Schnittstelle 104 ausgangsseitig ist über eine bidirektionale Datenleitung mit einer nachfolgenden Frankiermaschine zum Austausch von Signalen Sf verbunden. Das können beispielsweise Signale sein, die briefspezifische Daten betreffen.

Der Transport- und Wiegeteil 2 besteht im wesentlichen aus einem Transporteinrichtung 21 und einem Meßwandler 22. Die Transporteinrichtung 21 wiederum besteht aus einem Transportband 212, einem Motor 211 zum Antrieb des Transportbandes 212 sowie eine mechanische Aufnahme 214. Der Teil des Transportbandes 212, auf dem jeweils der Brief B steht, bildet den Wiegeteller 213.

Der Meßwandler 22 enthält als Kernstück eine piezoelektrische Wiegezelle, die mechanisch über die Aufnahme 214 mit der Transporteinrichtung 21 und elektrisch über eine bidirektionale Datenleitung mit dem Rechner 10 sowie über eine eine Steuerleitung mit dem Motor 211 verbunden ist.

Der Eingangssensor 11 ist im Eingangsbereich des Wiegetellers 213 angeordnet. Der Ausgangssensor 12 ist im Ausgangangsbereich des Wiegetellers 213 angeordnet.

Passiert ein Postgut B von der Vereinzelungsvorrichtung kommend mit seiner Vorderkante den Eingangssensor 11, so geht von diesem ein erstes vorbereitendes Signal an den Eingangszähler 105. Passiert das Postgut B mit seiner Hinterkante den Eingangssensor 11, so geht ein zweites Signal an den Eingangszähler 105 und wird in diesem als zugehender Zählwert Ne gespeichert. Vom Eingangszähler 105 wird über den Mikroprozessor 100, den Programmspeicher 101 sowie den nichtflüchtigen Speicher 102 und anschließend über die Datenleitung zum Meßwandler 22 der Wiegeprozess ausgelöst und nach Abschluß desselben das Ergebnis adressenbezogen in dem Speicher 102 gespeichert.

Die Meßdaten werden in dem Arbeitsspeicher 107 zwischengespeichert.

Danach wird über die eingangsseitige Ein/Ausgabe-Schnittstelle 103 an die Vereinzelungsvorrichtung Empfangsbereitschaft für den nächsten Brief B gemeldet.

Passiert der Brief B stromabwärts zur Frankiermaschine hin mit seiner Vorderkante den Ausgangssensor 12, so geht von diesem ein erstes vorbereitendes Signal an den Ausgangszähler 106. Passiert der Brief B mit seiner Hinterkante den Ausgangssensor 12, so geht ein zweites Signal an den Ausgangszähler 106 und wird in diesem als abgehender Zählwert Na gespeichert. Vom Ausgangszähler 106 werden über den Mikroprozessor 100, den Programmspeicher 101 sowie den nichtflüchtigen Speicher 102 und anschließend über die Datenleitung zur Frankiermaschine dieser mindestens das Gewicht G des zu erwartenden Briefes B adressenbezogen mitgeteilt.

Mit dem Auflaufen des Briefes B auf den Wiegeteller 213 beziehungsweise mit dem Passieren der Vorderkante des Briefes B des Eingangssensors 11 beginnt die erste Pausenzeit Tp1.

Mit dem Passieren der Rückkante des Briefes B des Eingangssensors - der Brief B ist vollständig auf dem Wiegeteller 213 - endet die erste Pausenzeit Tp1 und die Meßzeit Tm beginnt. Der Zugang eines Briefes B wird in dem Eingangszähler 105 erfaßt und an den Mikroprozessor 100 signalisiert.
Nach Beendigung der Meßzeit Tm - stabiler Gewichtswert G liegt eher vor und wird in dem nichtflüchtigen Speicher 102 gespeichert - beginnt die zweite Pausenzeit Tp2. Die Vorderkante des Briefes B hat den Ausgangssensor 12 passiert.
Wenn die Hinterkante des Briefes B den Ausgangssensor 12 passiert, hat der Brief B den Wiegeteller 213 verlassen, die zweite Pausenzeit Tp2 ist beendet. Zugleich endet damit die Verweilzeit Tw des Briefes B auf dem Wiegeteller 213. Die Verweilzeit Tw setzt sich demzufolge aus der Summe von erster Pausenzeit Tp1, Meßzeit Tm und zweiter Pausenzeit Tp2 zusammen, siehe auch nachfolgende Figuren. Der Abgang des Briefes B wird in dem Ausgangszähler 106 erfaßt und dem Mikroprozessor 100 signalisiert.

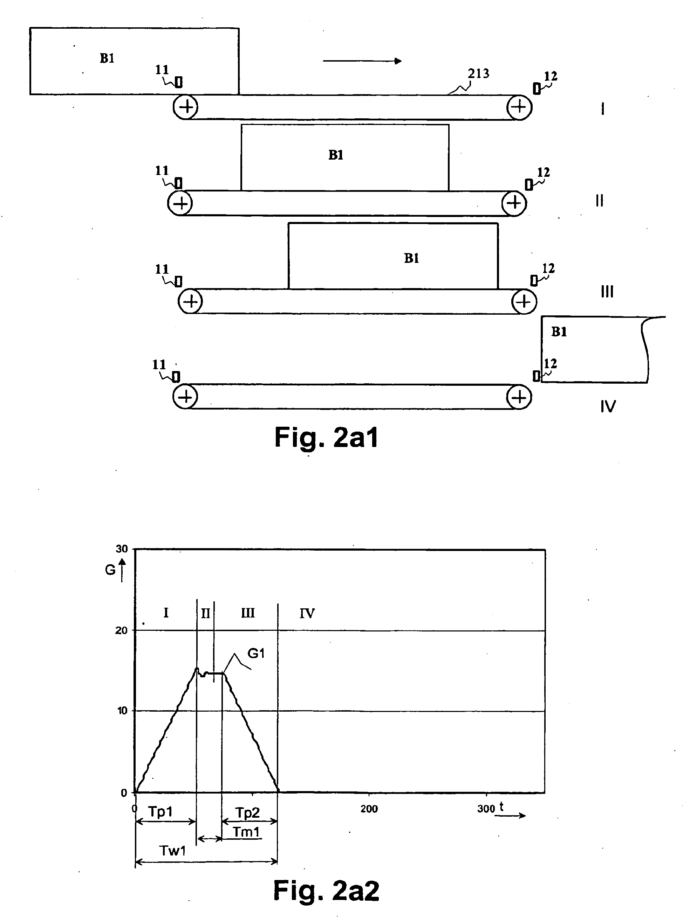

In Fig. 2a1 ist der räumliche Ablauf für die Wägung eines langen Briefes B1 und in Fig. 2a2 ist das zugeordnete Zeitdiagramm dargestellt.
Phase I entspricht dem Auflaufvorgang, identisch erste Pausenzeit Tp1.
Phase II entspricht dem Meßvorgang bis ein stabiler Gewichtswert erreicht ist. Die eigentliche Meßzeit Tm1 ist länger. Der stabile Zustand hat sich bei einem Wert G1 eingestellt, das ist das Gewicht des langen Briefes B1.
Phase III schließt unmittelbar an Phase II an. Sie dauert demzufolge länger als die Pausenzeit Tp2, die dem Ablaufvorgang entspricht.
Mit Beginn von Phase IV hat der Brief B1 den Wiegeteller 213 vollständig verlassen.

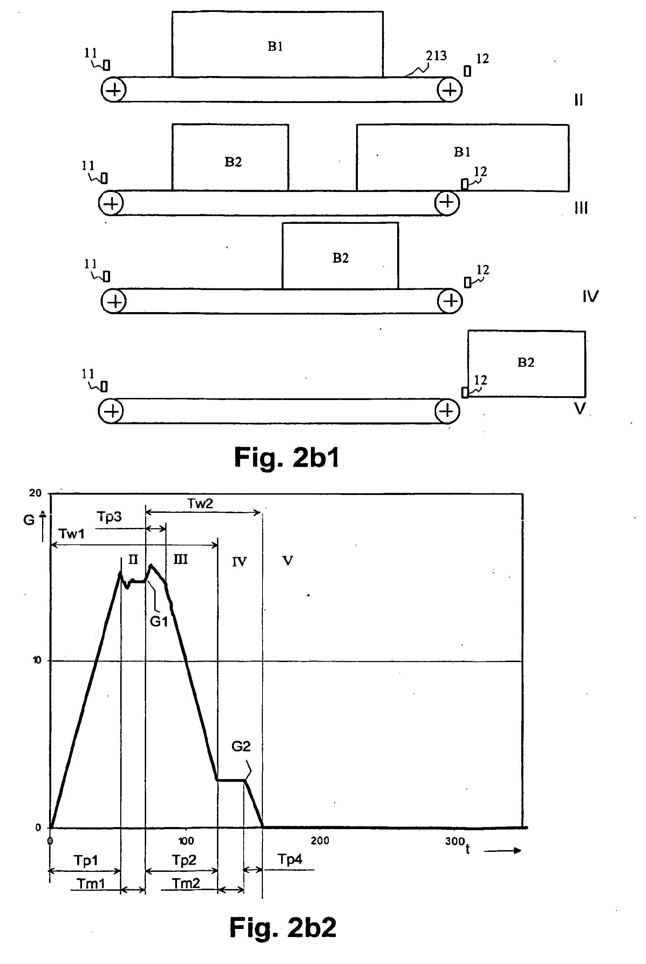

In Fig. 2b ist der Ablauf dargestellt, wenn ein kurzer Brief B2 einem langen Brief B1 folgt. Wie bereits vorstehend beschrieben, liegt in Phase II der stabile Gewichtswert G1 für den langen Brief B1 vor. Nach Beendigung der Meßzeit Tm1 für den Brief B1 kann der kurze Brief B2 auf den Wiegeteller 213 auflaufen. Sobald der Brief 2 auf den Wiegeteller 213 befördert wird, wird der Eingangssensor 11 abgedeckt.
Die Phase III beginnt zugleich mit der ersten Pausenzeit Tp3 für den Brief B2. Kurzzeitig steigt die Gewichtskurve an um dann wieder abzufallen bis ein erneuter stabiler Gewichtswert G2 eintritt, der dem Gewicht des Briefes B2 entspricht. Das liegt daran, daß das Gesamtgewicht zunächst um das Gewicht des dazugekommenen kurzen Briefes B2 ansteigt und dann kontinuierlich um das Gewicht des abgehenden langen Briefes B1 abnimmt bis nur noch der kurze Brief B2 auf dem Wiegeteller 213 ist. Der lange Brief B1 beginnt den Wiegeteller 213 zu verlassen und deckt den Ausgangssensor 12 ab, wenn der Eingangssensor 11 durch den kurzen Brief B2 noch abgedeckt ist. Die Phase III ist beendet, wenn die Hinterkante des Briefes B1 den Ausgangssensor 12 passiert hat.
Die Phase IV beginnt mit der Meßzeit Tm2 für den Brief B2. Die Phase IV endet mit Ablauf der zweiten Pausenzeit Tp4 für den Brief B2. Die Pausenzeiten Tp3 und Tp4 für den kurzen Brief B2 sind entsprechend den Längen- und Gewichtsverhältnissen kürzer als die Pausenzeiten Tp1 und Tp2 für den langen Brief B1.
Die Phase V beginnt, wenn die Hinterkante des Briefes B2 den Ausgangssensor 12 passiert und damit den Wiegeteller 213 verlassen hat. Eingangs- und Ausgangssensor 11, 12 sind frei und der Gewichtswert ist Null.

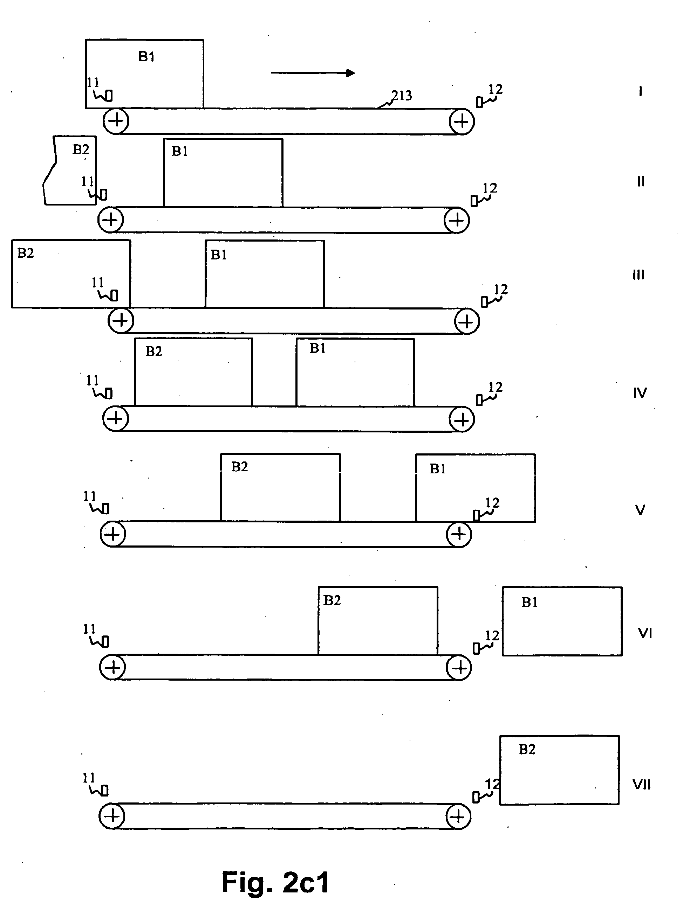

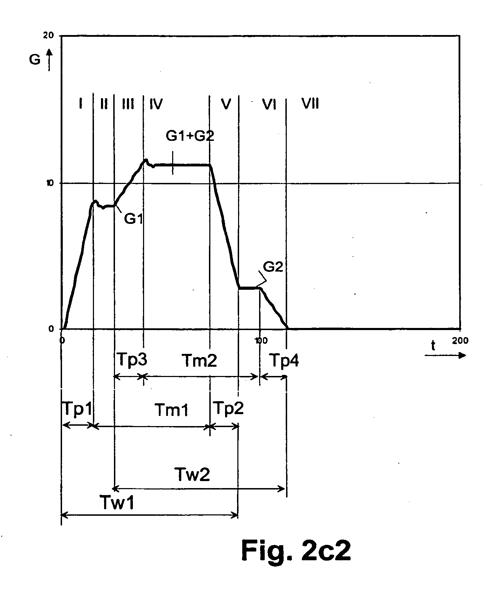

In Fig. 2c ist der Ablauf dargestellt, wenn ein kurzer Brief B2 einem kurzen Brief B1 folgt.
Phase I: Im Unterschied zum vorher beschriebenen Fall ist die erste Pausenzeit Tp1 kürzer, da der kurze und leichte Brief B1 in kürzerer Zeit vollständig auf dem Wiegeteller 213 liegt als ein langer und schwererer Brief.
Phase II: Entsprechend verkürzt ist auch die erforderliche Meßzeit, die mit Abschluß der Phase II endet. Der Gewichtswert G1 für Brief B1 liegt lange genug stabil vor. Die tatsächliche Meßzeit Tm1 läuft jedoch so lange, bis die Vorderkante von Brief B1 den Ausgangssensor 12 passiert.
Phase III: Der nachfolgende kurze Brief B2 gelangt in der Pausenzeit Tp3 auf den Wiegeteller 213, wodurch der Gewichtswert ansteigt. Die Pausenzeit Tp3 ist beendet, wenn die Hinterkante des Briefes B2 den Eingangssensor 11 passiert. Die Phase III ist damit abgeschlossen.
Phase IV: Die Meßzeit Tm2 für Brief B2 beginnt. Der Brief B1 ist noch vollständig auf dem Wiegeteller 213. Es wird für beide Briefen B1 und B2 gemeinsam das Gesamtgewicht Gs=G1+G2 ermittelt. Alternativ dazu besteht bereits in dieser Phase die Möglichkeit zur Gewichtsbestimmung für den Brief B2 aus der Differenz G2 = Gs-G1. Die Phase IV endet mit Abschluß der Meßzeit Tm1 für Brief B1, das heißt, wenn dessen Vorderkante den Ausgangssensor 12 passiert.
Phase V: Der Brief B1 verläßt den Wiegeteller 213. Die zweite Pausenzeit Tp2 für den Brief B1 beginnt. Mit Ende der Pausenzeit Tp2 endet die Phase V, die Hinterkante des Briefes B1 hat den Ausgangssensor 12 passiert.
Phase VI: Der zweite Brief B2 ist allein auf dem Wiegeteller 213, der ermittelte Gewichtswert entspricht dem Gewichtswert G2 des Briefes B2. Durch Vergleich des in Phase VI ermittelten Gewichtswertes G2 mit dem in Phase IV durch Differenzbildung ermittelten Gewichtswertes G2 ist eine Aussage über die Meßgenauigkeit möglich. Daraus können dann wieder erforderlichenfalls entsprechende Korrekturfaktoren abgeleitet werden. Nach Ablauf der zugeordneten Meßzeit Tm2 beginnt der Brief B2 den Wiegeteller 213 zu verlassen, das heißt, dessen Vorderkante passiert den Ausgangssensor 12. Damit beginnt die zweite Pausenzeit Tp4 für den Brief B2. Phase VI endet zusammen mit der Pausenzeit Tp4.
Phase VII: Beginn mit dem Passieren der Hinterkante des Briefes B2 an dem Ausgangssensor 12.

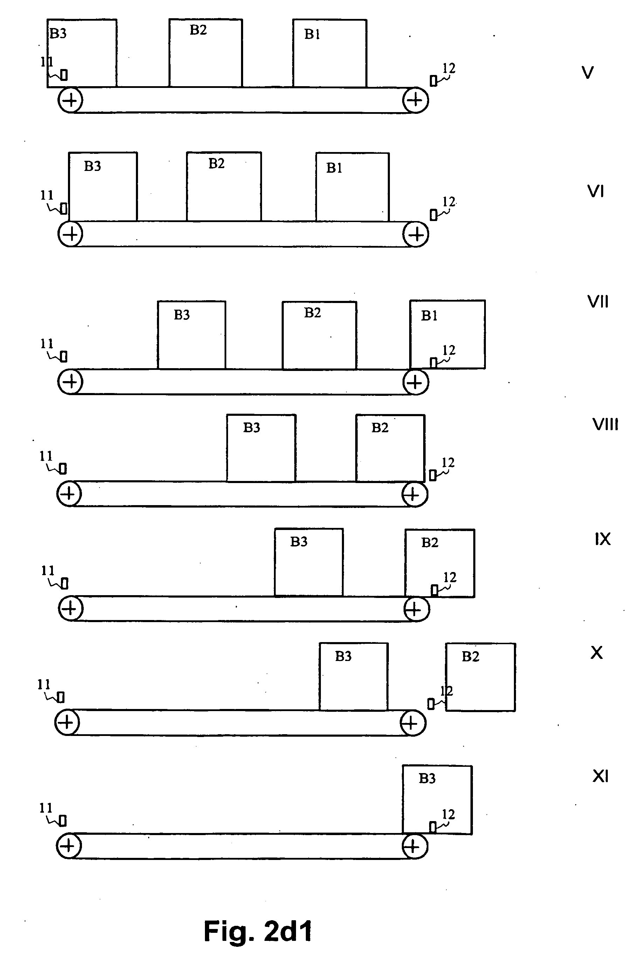

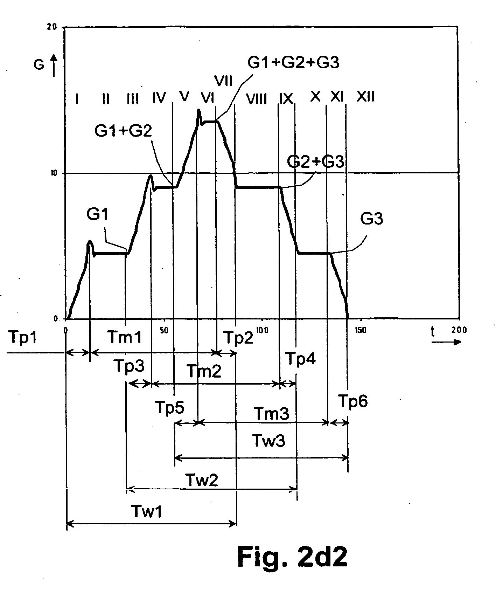

In Fig. 2d ist der Ablauf dargestellt, wenn drei kurze Briefe B1, B2, B3 nacheinander auf den Wiegeteller 213 gelangen und kurzzeitig gleichzeitig auf demselben vorhanden sind. Die Maximalanzahl der Briefe auf dem Transportband 212 wäre hier M = 3.
Bis zum Ende von Phase IV besteht Identität mit dem Ablauf in Fig. 2c. Der räumliche Ablauf wird der Kürze halber erst ab Phase V dargestellt und die Beschreibung des zeitlichen Ablaufes erfolgt analog.
Phase V: Zu Beginn gelangt der dritte kurze Brief B3 auf den Wiegeteller 213 und dessen erste Pausenzeit Tp5 beginnt. Phase V endet zusammen mit der Pausenzeit Tp5, wenn die Hinterkante von Brief B3 den Eingangssensor 11 passiert.
Phase VI: Der Brief B3 befindet sich gemeinsam mit den beiden vorhergehenden Briefen B2 und B1 auf dem Wiegeteller 213. Die Meßzeit Tm3 für den Brief B3 läuft. Mit Vorliegen des stabilen Gewichtszustandes wird das Gesamtgewicht Gs = G1+G2+G3 ermittelt. Die Phase VI endet zusammen mit der Meßzeit Tm1 für den Brief B1.
Phase VII: Die Vorderkante von Brief B1 passiert den Ausgangssensor 12 und die zweite Pausenzeit Tp2 läuft, bis die Hinterkante den Ausgangssensor 12 passiert. Die Verweilzeit Tw1 für den Brief B1 ist beendet.
Phase VIII: Der Brief B1 hat den Wiegeteller 213 verlassen; es liegt ein stabiler Gewichtszustand vor mit dem Gesamtgewicht Gs = G2+G3. Die Meßzeiten Tm2 und Tm3 für die Briefe B2 und B3 laufen noch. Die Phase VIII endet zusammen mit der Meßzeit Tm2 für den Brief B2.
Phase IX: Die Vorderkante von Brief B2 passiert den Ausgangssensor 12 und die zweite Pausenzeit Tp4 läuft, bis die Hinterkante den Ausgangssensor 12 passiert. Die Verweilzeit Tw2 für den Brief B2 ist beendet.
Phase X: Der Brief B2 hat den Wiegeteller 213 verlassen. Der Brief B3 ist allein auf dem Wiegeteller 213, es liegt ein stabiler Gewichtszustand vor mit dem Gewichtswert G3.
Phase XI: Die Vorderkante von Brief B3 passiert den Ausgangssensor 12 und die zweite Pausenzeit Tp6 läuft, bis die Hinterkante den Ausgangssensor 12 passiert. Die Verweilzeit Tw3 für den Brief B3 ist beendet.
Phase XII: Der Brief B3 hat den Wiegeteller 213 verlassen. Der aktuelle Gewichtswert ist G = 0.

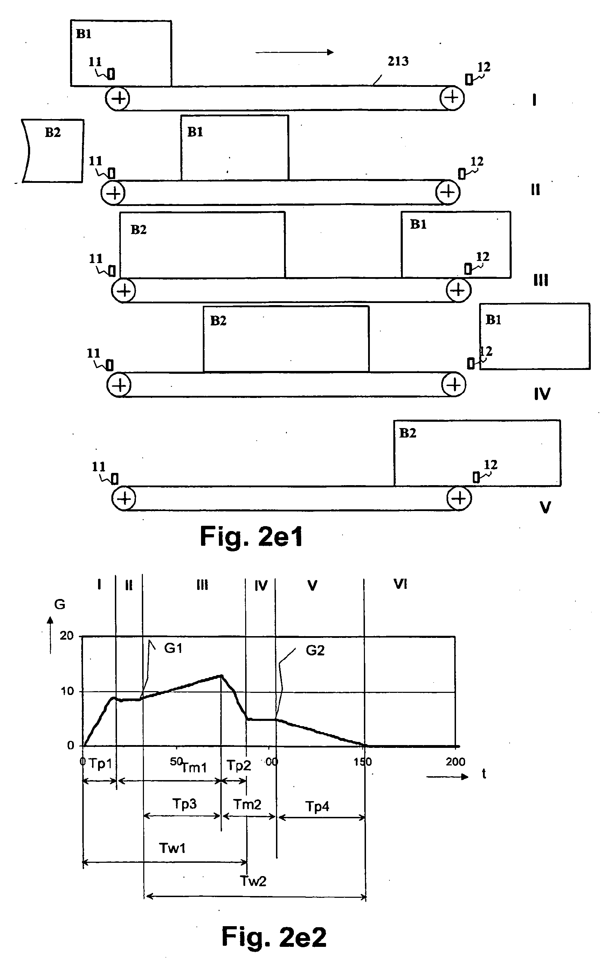

In Fig. 2e ist der Ablauf dargestellt, wenn ein leichter langer Brief B2 einem kurzen schwereren Brief B1 folgt.
Bis zum Ende von Phase II besteht Identität mit dem Ablauf in Fig. 2a. Der Ablauf wird daher erst ab Phase III beschrieben.
Phase III: Zu Beginn gelangt der zweite Brief B2 auf den Wiegeteller 213 und dessen erste Pausenzeit Tp3 beginnt. Während der zweite Brief B2 auf den Wiegeteller 213 aufläuft, beginnt der erste Brief B1 bereits wieder abzulaufen. Bevor die Hinterkante des zweiten Briefes B2 den Eingangssensor 11 passiert hat, hat die Vorderkante des ersten Briefes B1 den Ausgangssensor 12 passiert. Deshalb steigt die Gewichtskurve in Fig. 2e2 zunächst über die erste Pausenzeit Tp3 des Briefes B2 an, um dann über die zweite Pausenzeit Tp2 des Briefes B1 abzufallen. Die Meßzeit Tm1 für den ersten Brief B1 ist beendet und die Pausenzeit Tp2 beginnt, wenn dessen Vorderkante den Augangssensor 12 passiert. Gleichzeitig beginnt die Meßzeit Tm2 für den Brief B2. Die Phase III ist beendet, wenn die Hinterkante des Briefes B1 den Ausgangssensor 12 passiert. Die Verweilzeit Tw1 des Briefes B1 auf dem Wiegeteller 213 ist abgelaufen.
Phase IV: Der zweite Brief B2 ist allein auf dem Wiegeteller 213; es liegt ein stabiler Gewichtszustand vor mit dem Gewicht G2.
Phase V: Die Vorderkante des Briefes B2 passiert den Ausgangssensor 12; die Meßzeit Tm2 ist beendet und die zweite Pausenzeit Tp4 beginnt. Wenn die Hinterkante des Briefes B2 den Ausgangssensor 12 passiert, endet die Pausenzeit Tp4 und zugleich die Phase V.
Phase VI: Der Brief B2 hat den Wiegeteller 213 verlassen; der Gewichtswert ist G =0.

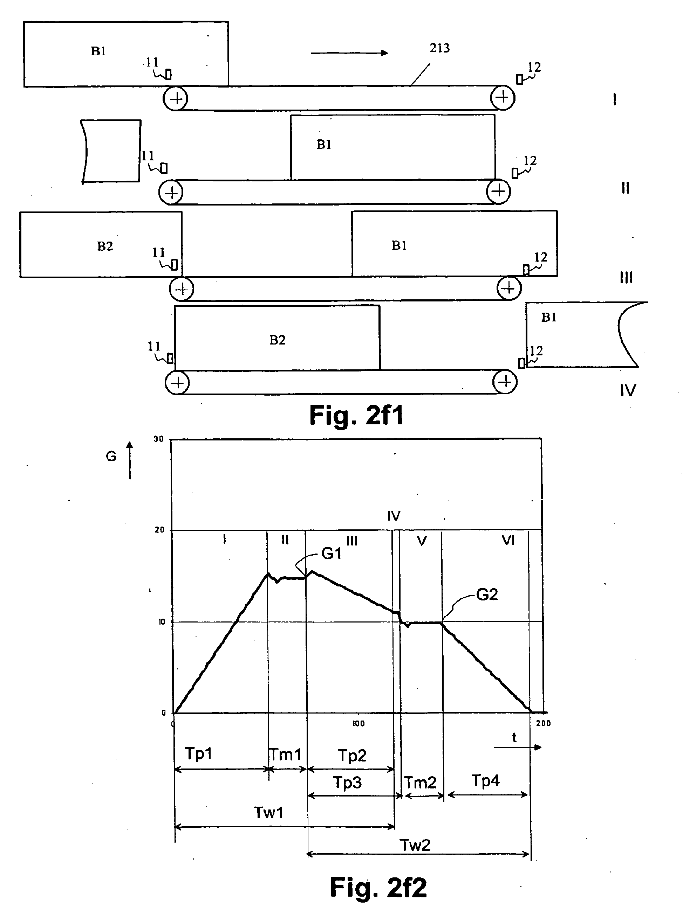

In Fig. 2f ist der Ablauf dargestellt, wenn ein leichter langer Brief B2 einem schwereren langen Brief B1 folgt. Im Wesentlichen besteht Übereinstimmung mit dem Ablauf in Fig. 2e, nur die Verweilzeit für den ersten Brief B1 ist entsprechend länger.

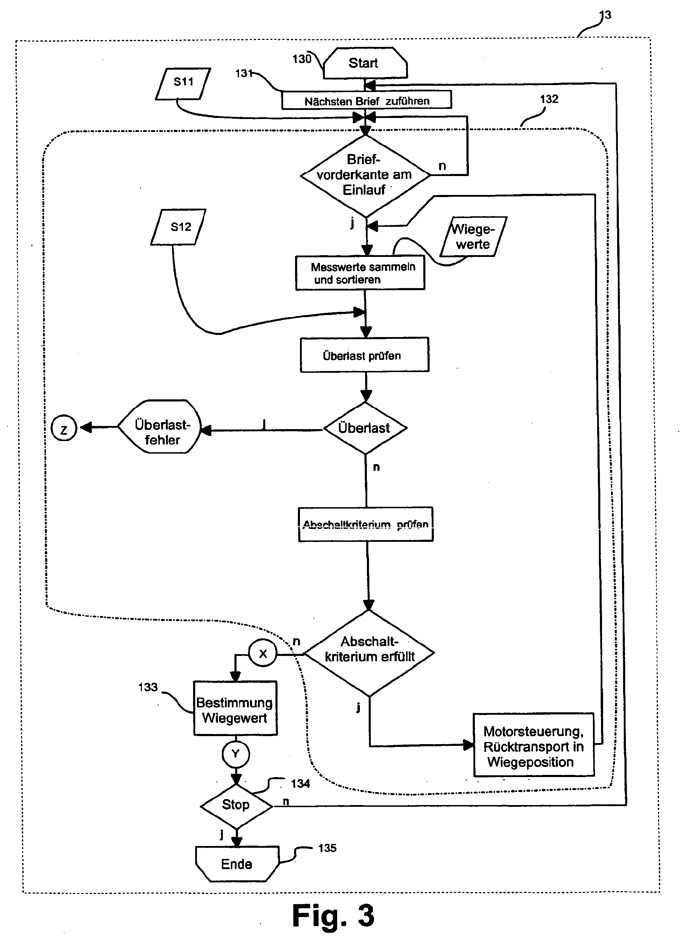

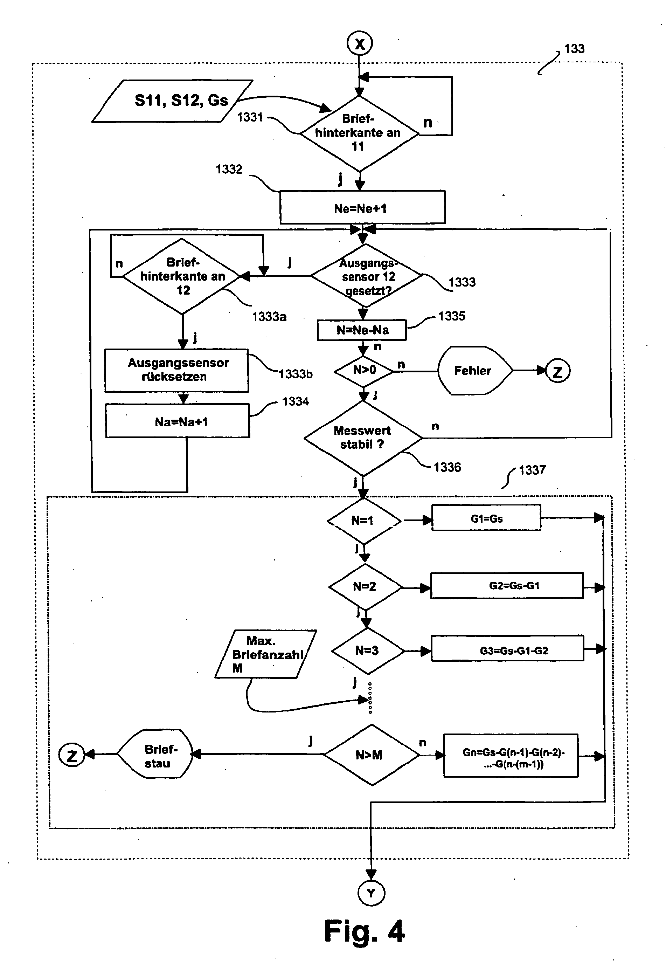

In Fig. 3 ist das Flußdiagramm für die gesamte Steuerung der Waage entsprechend dem Stand der Technik gemäß EP 1 014 052 A1, insbesondere dort Fig. 6, dargestellt. Auf eine ausführliche Beschreibung kann daher verzichtet werden.
Mit dem Schritt 130 wird die Ablaufsteuerung für das Steuerteil 13 gestartet. Mit dem Eingangssensor 11 wird der Briefeingang als Signal S11 gemäß der Reihenfolge erster Brief B1, zweiter Brief B2 und so weiter erfaßt.
Mit dem Schritt 131 wird der nächste Brief zugeführt.
Der Schritt 132 beinhaltet eine Untermenge von Teilschritten betreffend die Meßwertaufbereitung einschließlich Sortierung, Prüfung der Abschaltkriterien bei zu starken Meßwertschwankungen sowie Überlastprüfung.
Der Schritt 133 umfaßt die Wiegewertbestimmung mit einer Untermenge von Teilschritten, siehe dazu Fig. 4 nebst Erläuterung.
Der Schritt 134 betrifft die Stoppentscheidung. Wenn "letzter Brief nein", dann weiter gemäß Schritt 131, wenn "letzter Brief ja", dann weiter zu Schritt 135, gleichbedeutend Prozeßende.

In Fig. 4 ist das Flußdiagramm für die Wiegewertbestimmung dargestellt, wenn gleichzeitig mehrere Briefe B auf dem Wiegeteller 213 vorhanden sind. Der Eingang X des Wiegewertbestimmungsteils 133 ist mit dem Ausgang der Transportsteuerung und Überlastkontrolle 132, siehe Fig. 3, verbunden.
Der Schritt 1331 beinhaltet die Eingangsüberwachung durch den Eingangssensor 11. Passiert ein Brief B den Eingangssensor 11, so wird ein Signal S11 an den Eingangszähler 105 geliefert und in diesem als zugehender Zählwert Ne beziehungsweise Ne+1 erfaßt. Die Anzahl Ne der eingehenden Briefe wird durch die Zählung der Briefvorderkanten durch den Eingangszähler 105 ermittelt.

Mit Schritt 1332 beginnt die Meßzeit Tm, wenn der Eingangssensor 11 wieder frei ist, das heißt, wenn die Hinterkante des eingehenden Briefes B diesen passiert hat. Sobald ein stabiler Gesamtgewichtswert Gs vorliegt, wird der nächste Brief, sofern vorhanden, zugeführt.

Der Schritt 1333 beinhaltet die Ausgangsüberwachung durch den Ausgangssensor 12. Passiert ein Brief B den Ausgangssensor 12, so wird ein Signal S12 an den Ausgangszähler 106 geliefert und in diesem als abgehender Zählwert Na beziehungsweise Na+1 erfaßt. Solange der Ausgangssensor 12 nicht frei ist, findet eine Gewichtsveränderung statt und deshalb kann auch kein neuer Brief B zugeführt werden.

Zu diesem Zweck wird der aktuelle Zustand des Ausgangssensors 12 gespeichert. In Schritt 1333a erfolgt eine Briefhinterkantenkontrolle und der Zustand des Ausgangssensors 12 wird als Flag gesetzt. In Schritt 1333b - Ausgangssensor 12 wieder frei - wird der Flag zurückgesetzt.

Gemäß Schritt 1334 wird durch den Ausgangszähler 106 die Anzahl Na der abgehenden Briefe B durch die Zählung der Briefhinterkanten erfaßt, das heißt, wenn der Ausgangssensor 12 frei ist.

Der Schritt 1335 ist die sogenannte Differenzkontrolle. Hier wird die Anzahl N der auf dem Wiegeteller 213 befindlichen Briefe B im Mikroprozessor 100 aus der Differenz der Anzahl Ne der eingehenden Briefe B und der Anzahl Na der abgehenden Briefe B ermittelt. Bei Differenzwert N größer Null "nein" trotz vorhandener Briefe B wird an Ausgang Z Fehler signalisiert.

Der Schritt 1336 betrifft die Meßwertstabilitätsprüfung. Ein stabiler Meßwert kann vorliegen, wenn sowohl der Eingangssensor 11 als auch der Ausgangssensor 12 frei ist. Als weiteres zwingendes Kriterium kommt dazu, wenn in einer festgelegten Gewichtsklasse der gemessene Gewichtswert für eine festgelegte Zeit - mindestens eine halbe Periode aber kleiner Meßzeit Tm - innerhalb eines zugelassenen Schwankungsbereiches bleibt, siehe dazu auch EP 1 014 052, insbesondere Fig. 8 und 9 sowie zugehöriger Text. Obwohl das Gesamtgewicht Gs bei gleichzeitig mehreren Briefen Bn auf dem Wiegeteller 213 in einer höheren Gewichtsklasse mit einem größeren Schwankungsbereich liegen kann, ist eine Einengung des Schwankungsbereiches über Mittelwertbildung möglich und damit eine ausreichende Meßgenauigkeit einstellber.
Der Schritt 1337 betrifft die eigentliche Briefgewichtsermittlung, die eine schrittweise Gewichtsermittlung entsprechend den eingehenden und abgehenden Briefen B vorsieht.
Für die ersten drei eingehenden Briefe bei vorher leerem Wiegeteller 213 gilt: für N=Ne=1 ist G=Gs=G1, für N=Ne=2 ist G2=Gs-G1, für N=Ne=3 ist G3=Gs-G1-G2.
Übersteigt die Anzahl N der auf dem Wiegeteller befindlichen Briefe B die zulässige Maximalanzahl M der Briefe B, dann wird N>M als Briefstau beziehungsweise Überlastfehler am Ausgang Z gewertet und die Waage erst einmal leergefahren. In der Regel gilt M=3.
Hat der erste Brief B den Wiegeteller 213 verlassen, dann ist der Differenzwert N=Ne-Na=Ne-1 und es gilt: für N=2 ist G=Gs-G1-G2 und für N=3 ist G=Gs-G1-G2-G3. Im letzteren Fall würde im Eingangszähler 105 der zugehende Zählwert Ne=4 sein.
Da eine Gewichtsermittlung sowohl bei Gewichtszunahme als auch bei Gewichtsabnahme möglich ist, kann mit dem erfindungsgemäßen Verfahren vor und nach einem längeren Wiegebetrieb eine Eichkontrolle mit bis zu drei Poststücken vorgenommen werden.

### Verwendete Bezugszeichen

- 1: Steuerteil der dynamischen Waage
- 10: Rechner
- 100: Mikroprozessor
- 101: Programmspeicher für die Betriebssoftware
- 102: Nichtflüchtiger Speicher
- 103: Ein/Ausgabe-Schnittstelle eingangsseitig
- 104: Ein/Ausgabe-Schnittstelle ausgangsseitig
- 105: Eingangszähler
- 106: Ausgangszähler
- 107: Arbeitsspeicher, RAM
- 11: Eingangssensor
- 12: Ausgangssensor
- 13: Ablaufsteuerung für Steuerteil 1
- 130: Startblock
- 131: Briefzuführung
- 132: Transportsteuerung und Überlastkontrolle
- 133: Wiegewertbestimmungsteil
- 1331: Eingangskontrolle
- 1332: Eingangserfassung
- 1333: Ausgangskontrolle mit Speicherung des Ausgangssensorzustandes, Flag gesetzt mit Briefvorderkante
- 1333a: Briefhinterkantenkontrolle
- 1333b: Flag rückgesetzt mit Briefhinterkante
- 1334: Ausgangserfassung
- 1335: Differenzkontrolle
- 1336: Meßwertstabilitätsprüfung
- 1337: Gewichtserfassung
- 134: Stopentscheidung
- 135: Endabschaltung
- 2: Transport- und Wiegeteil
- 21: Transporteinrichtung
- 211: Motor für den Antrieb des Transportbandes 212
- 212: Transportband
- 213: Wiegeteller
- 214: Mechanische Aufnahme
- 22: Meßwandler
- B: Postgut, Poststück, Brief
- G: Gewicht
- Gs: Gesamtgewicht auf dem Wiegeteller 213
- M: zulässige Maximalanzahl Briefe auf dem Wiegeteller 213
- N: Differenzwert (Ne - Na), Prüfzählerstand
- Na: abgehender Zählwert
- Ne: zugehender Zählwert
- Sf: Signale zu/von der Frankiermaschine
- Sv: Signale von/zu der Vereinzelungsvorrichtung
- S11: Signale vom Eingangssensor 11
- S12: Signale vom Ausgangssensor 12
- Tm: Meßzeit bis zum eingeschwungenen stabilen Zustand
- Tp: Pausen- beziehungsweise Abstandszeit zwischen zwei Meßzeiten
- Tw: Verweilzeit des Postgutes auf dem Wiegeteller
- X: Ausgang Transportsteuerung und Überlastkontrolle, Eingang Wiegewertbestimmung
- Y: Ausgang Wiegewertbestimmung
- Z: Ausgang Überlastfehler
- j: Alternativentscheidung ja
- n: Alternativentscheidung nein
- t: Zeit

## Patentansprüche

1. Verfahren zum Wiegen von bewegtem Postgut, insbesondere von auf einer Kante stehend angeordneten Briefen, mittels einer dynamischen Waage als Bestandteil eines Postverarbeitungssystems, in dem das Postgut vereinzelt, gewogen und frankiert wird, wobei die Waage einen Wiegeteller aufweist, dessen Boden durch den Transportriemen einer Transporteinrichtung gebildet wird, deren Transportgeschwindigkeit innerhalb des Meßzeitbereiches - Zeit vom Wiegebeginn bis zum Vorliegen eines stabilen Meßergebnisses - verzögert lastabhängig und außerhalb desselben beschleunigt lastunabhängig eingestellt wird,
**dadurch gekennzeichnet,**
**daß** nach Vorliegen eines stabilen Gewichtswertes (G) das nächstfolgende Postgut (B) auf den Wiegeteller (213) geleitet wird und das zugeordnete Gewicht (G) bei Zugang von Postgut (B) durch die Gewichtszunahme und bei Abgang von Postgut (B) durch die Gewichtsabnahme ermittelt wird.

2. Verfahren nach Anspruch 1, **dadurch gekennzeichnet, daß** der Eingang von Postgut (B) durch einen Eingangssensor (11) überwacht wird und ein Signal (S11) an einen Eingangszähler (105) gesendet wird, wenn eine Postgutvorderkante den Eingangssensor (11) passiert.

3. Verfahren nach Anspruch 1 und 2, **dadurch gekennzeichnet, daß** die Anzahl (Ne) der eingehenden Postgüter (B) in dem Eingangszähler (105) erfaßt wird.

4. Verfahren nach Anspruch 1 und 2, **dadurch gekennzeichnet, daß** die Gewichtsmessung und damit die Meßzeit (Tm) für das aktuell eingehende Postgut (B) beginnt, wenn dessen Hinterkante den Eingangssensor (105) passiert hat.

5. Verfahren nach Anspruch 1 und 4, **dadurch gekennzeichnet, daß** nach Ablauf des jeweiligen Meßzeitbereiches (Tm) das nächste Postgut (B), sofern vorhanden, zugeführt wird.

6. Verfahren nach Anspruch 1, **dadurch gekennzeichnet, daß** der Ausgang von Postgut (B) durch einen Ausgangssensor (12) überwacht wird und das zugeordnete Signal (S12) an einen Ausgangszähler (106) gesendet wird, wenn eine Postguthinterkante den Ausgangssensor (12) passiert.

7. Verfahren nach Anspruch 1 und 6, **dadurch gekennzeichnet, daß** die Anzahl (Na) der abgehenden Postgüter (B) in dem Ausgangszähler (106) erfaßt wird.

8. Verfahren nach den Ansprüchen 1 bis 7, **dadurch gekennzeichnet, daß** die Anzahl (N) der auf dem Wiegeteller (213) befindlichen Briefe (B) aus der Differenz der Anzahl (Ne) der eingehenden Briefe (B) und der Anzahl (Na) der abgehenden Briefe (B) ermittelt wird.

9. Verfahren nach den Ansprüchen 1, 5 und 8, **dadurch gekennzeichnet, daß** ein stabiler Gewichtswert (G) vorliegt, wenn sowohl der Eingangssensor (11) als auch der Ausgangssensor (12) frei ist und der aktuelle Gewichtswert (G) für eine festgelegte Zeitspanne (<Tm) innerhalb eines zugelassenen Schwankungsbereiches bleibt.

10. Verfahren nach den Ansprüchen 1 bis 9, **dadurch gekennzeichnet, daß** der Gewichtswert (Gn) für das aktuell zu wiegende Poststück (Bn) dem Differenzwert aus Gesamtgewicht (Gs) minus Gewichtswerte ( Gn-1, Gn-2, Gn-3) der übrigen auf den Wiegeteller (213) befindlichen Poststücke (Bn-1, Bn-2, Bn-3) entspricht.

## Claims

1. A method for weighing postal items in motion, in particular letters arranged standing on their edge, by means of a dynamic balance as a component of a postal-item processing system in which the postal items are singularized, weighed and franked, said balance having a weighing plate the bottom of which is formed by the transport belt of a transport device the transport speed of which is set, within the measuring time period - time from the start of weighing until availability of a stable measuring result -, in a delayed load-dependent manner and, outside it, in an accelerated load-independent manner, **characterized in that**, after availability of a stable weight value (G), the next following postal item (B) is fed onto the weighing plate (213) and the assigned weight (G) is determined, upon entrance of a postal item (B), by the weight increase and, upon leaving of a postal item (B), by the weight decrease.

2. A method according to Claim 1, **characterized in that** the entrance of postal items (B) is monitored by an entry sensor (11) and a signal (S11) is sent to an entry counter (105) when the front edge of a postal item passes the entry sensor (11).

3. A method according to Claims 1 and 2, **characterized in that** the number (Ne) of incoming postal items (B) is registered in the entry counter (105).

4. A method according to Claims 1 and 2, **characterized in that** the weight measurement and thereby the measuring time (Tm) for the currently incoming postal item (B) starts when its rear edge has passed the entry sensor (11).

5. A method according to Claims 1 and 4, **characterized in that**, after expiry of the respective measuring time period (Tm), the next postal item (B), if present, is fed in.

6. A method according to Claim 1, **characterized in that** the leaving of postal items (B) is monitored by an exit sensor (12) and the assigned signal (S12) is sent to an exit counter (106) when the rear edge of a postal item passes the exit sensor (12).

7. A method according to Claims 1 and 6, **characterized in that** the number (Na) of outgoing postal items (B) is registered in the exit counter (106).

8. A method according to Claims 1 to 7, **characterized in that** the number (N) of letters (B) present on the weighing plate (213) is determined from the difference of the number (Ne) of incoming letters (B) and the number (Na) of outgoing letters (B).

9. A method according to Claims 1, 5 and 8, **characterized in that** a stable weight value (G) is present when both, the entry sensor (11) and the exit sensor (12) are free and the current weight value (G) remains within an admissible range of variation for a defined period of time (<Tm).

10. A method according to Claims 1 to 9, **characterized in that** the weight value (Gn) for the postal item (Bn) to be currently weighed corresponds to the difference value of total weight (Gs) minus weight values (Gn-1, Gn-2, Gn-3) of the other postal items (Bn-1, Bn-2, Bn-3) present on the weighing plate (213).

## Revendications

1. Procédé de pesage d'articles postaux en mouvement, en particulier pour des lettres disposées à la verticale sur une arête, le pesage étant effectué à l'aide d'une balance dynamique faisant partie d'un système de traitement de courrier, dans lequel les articles postaux sont séparés, pesés et affranchis et dont ladite balance comporte un plateau de pesée, dont le fond est formé par une bande transporteuse d'un dispositif de convoyage, dont la vitesse de transport est réglée en fonction de la charge à l'intérieur de la plage du temps de mesure - durée du début de pesage jusqu'au moment où un résultat de mesure stable est disponible - et qui est accélérée et réglée indépendamment de la charge hors de ladite plage du temps de mesure, **caractérisé en ce que** l'article postal (B) suivant soit transféré sur le plateau de pesage (213) lorsqu'une valeur de poids (G) stable est disponible et que le poids (G) correspondant soit alors déterminé en fonction de l'augmentation de poids lors de l'entrée de l'article postal (B) et en fonction de la baisse de poids engendrée par la sortie de l'article postal (B).

2. Procédé selon la revendication 1, **caractérisé en ce que** l'entrée de l'article postal (B) soit surveillée par un capteur d'entrée (11) et qu'un signal (S11) soit envoyé à un compteur d'entrées (105), lorsque l'arête frontale d'un article postal passe devant le capteur d'entrée (11).

3. Procédé selon les revendications 1 et 2, **caractérisé en ce que** le nombre (Ne) des articles postaux (B) entrants soit enregistré par le compteur d'entrées (105).

4. Procédé selon les revendications 1 et 2, **caractérisé en ce que** la mesure du poids et donc le temps de mesure (Tm) pour l'article postal (B) entrant commencent si l'arête arrière de celui-ci a passé devant le capteur d'entrée (105).

5. Procédé selon les revendications 1 et 4, **caractérisé en ce que** l'article postal suivant, si disponible, soit transféré après l'écoulement de la plage du temps de mesure (Tm).

6. Procédé selon la revendication 1, **caractérisé en ce que** la sortie de l'article postal (B) soit surveillée par un capteur de sortie (12) et qu'un signal (S12) correspondant soit envoyé à un compteur de sorties (106), lorsque l'arête arrière d'un article postal passe devant le capteur de sortie (12).

7. Procédé selon les revendications 1 et 6, **caractérisé en ce que** le nombre (Na) des articles postaux (B) sortants soit enregistré par le compteur de sorties (106).

8. Procédé selon les revendications 1 à 7, **caractérisé en ce que** le nombre (N) des lettres (B) se trouvant sur le plateau de pesée (213) soit déterminé par la différence du nombre (Ne) des lettres (B) entrantes et du nombre (Na) des lettres (B) sortantes.

9. Procédé selon les revendications 1, 5 et 8, **caractérisé en ce qu'**une valeur de poids (G) stable est disponible si le capteur d'entrée (11) ainsi que le capteur de sortie (12) sont libres et que la valeur de poids (G) actuelle reste dans les limites d'une zone de fluctuation autorisée pendant un intervalle de temps défini (<Tm).

10. Procédé selon les revendications 1 à 9, **caractérisé en ce que** la valeur du poids (Gn) de l'article postal (Bn) à peser actuellement, corresponde à la différence du poids total (Gs) minoré des valeurs de poids (Gn-1, Gn-2, Gn-3) des autres articles postaux (Bn-1, Bn-2, Bn-3) se trouvant sur le plateau de pesée (213).
